# EUROPÄISCHE PATENTSCHRIFT

(11) **EP 1 815 958 B1**
(45) Veröffentlichungstag und Bekanntmachung des Hinweises auf die Patenterteilung: **01.10.2008**
(21) Anmeldenummer: 07405022.0
(22) Anmeldetag: 26.01.2007
(51) Int. Cl.: B29B 7/42

(54) **Misch- und Knetmaschine**
Mixer and kneader
Mélangeur pétrisseur

(30) Priorität: 06.02.2006 CH 1802006
(43) Veröffentlichungstag der Anmeldung: 08.08.2007
(73) Patentinhaber: Buss AG, 4133 Pratteln (CH)
(72) Erfinder: Siegenthaler, Hans-Ulrich, 5034 Suhr (CH)
(74) Vertreter: Rottmann, Maximilian

(56) Entgegenhaltungen:
- CH-A- 358 068
- CH-A5- 576 086
- FR-A- 1 184 393
- FR-A- 1 540 540
- FR-A- 2 193 649
- GB-A- 1 380 149
- NL-C- 86 390
- US-A- 3 841 611

## Beschreibung

Misch- und Knetmaschinen der hier zur Rede stehenden Art werden insbesondere zum Aufbereiten von schüttgutartigen, plastischen und/oder pastösen Massen eingesetzt. Beispielsweise dienen sie dem Verarbeiten von zähplastischen Massen, dem Homogenisieren und Plastifizieren von Kunststoffen, dem Einarbeiten von Füll- und Verstärkungsstoffen wie auch dem Herstellen von Ausgangsmaterialien für die Lebensmittel-, Chemie-/ Pharma und Aluminiumindustrie. Das Arbeitsorgan der Misch-und Knetmaschine ist üblicherweise als sogenannte Schneckenwelle ausgebildet, welche das zu verarbeitende Material in axialer Richtung vorwärts transportiert.

Bei herkömmlichen Misch- und Knetmaschinen führt das Arbeitsorgan lediglich eine rotative Bewegung aus. Daneben sind jedoch auch Misch- und Knetmaschinen bekannt, bei denen das Arbeitsorgan rotiert und sich gleichzeitig translatorisch bewegt. Der Bewegungsablauf des Arbeitsorgans zeichnet sich insbesondere dadurch aus, dass die Hauptwelle eine der Rotation überlagerte Sinusbewegung ausführt. Dieser Bewegungsablauf ermöglicht das gehäuseseitige Anbringen von Einbauten, so genannte Knetbolzen oder Knetzähne. Die Schneckenwelle ist dazu unterbrochen, so dass einzelne Knetflügel gebildet werden. Die auf der Hauptwelle angeordneten Schneckenelemente -Knetflügel- und die gehäuseseitigen Einbauten greifen ineinander und erzeugen damit die gewünschten Scher-/ Misch- und Knetfunktionen in unterschiedlichen Verfahrenszonen. Derartige Misch- und Knetmaschinen der letztgenannten Art sind Fachleuten insbesondere unter dem Begriff Buss KO-KNETER^{®} bekannt.

Bis anhin werden die Hauptflächen der Knetflügel wie auch der Knetbolzen durch konventionelle Bearbeitungsmethoden, wie Drehen, Fräsen, Elektroerosion etc. erzeugt. Unter Hauptfläche wird im vorliegenden Fall die einem Knetbolzen zugewandte Mantelfläche eines Knetflügels bzw. die einem Knetflügel zugewandte Mantelfläche eines Knetbolzens verstanden. Die geometrischen Formen dieser Elemente entstehen aus dem Aneinanderreihen von ebenen Flächen, Radien und Bögen. Ein grundsätzlicher Nachteil solcher Bearbeitungsmethoden besteht darin, dass nur relativ einfache Flächengeometrien erzeugt werden können. Daraus ergeben sich charakteristische Scher- und Dehnströmungsfelder, die nur an einem Punkt bzw. einer Linie zu maximalen Schergeschwindigkeiten zwischen den sich bewegenden Knetflügeln und den statischen Knetbolzen und damit zu entsprechendem dispersivem Energieeintrag in das gescherte Produkt führen. Anders ausgedrückt: durch die sinusförmige Axialbewegung des jeweiligen Knetflügels entsteht pro Scherzyklus nur an einer Linie eine maximale Annäherung von Knetflügel und Knetbolzen und damit eine maximale Schergeschwindigkeit mit entsprechender Scherdeformation/Energiedissipation in dem zu verarbeitenden Produkt. Für viele Anwendungen können mit den beschriebenen geometrischen Ausgestaltungen der Hauptflächen zwar die Ziele des Aufbereitens von schüttgutartigen, plastischen und/oder pastösen Massen erreicht werden, trotzdem wäre es wünschenswert, wenn über die Geometrie der Knetflügel und/oder der Knetbolzen zusätzliche Beeinftussungsmögtichkeiten bestehen würden. Beispielsweise ist aus der EP-A-1,262,303 ein Arbeitsorgan für eine Misch und/oder Fördereinrichtung bekannt, bei dem die Hauptflächen der Misch- und Knetflügel in der eingangs beschriebenen Art durch das Aneinanderreihen von ebenen Flächen, Radien und Bögen gebildet werden.

Aus der US-A-3,841,611 ist eine gattungsgemässe Misch- und Knetmaschine bekannt. Diese ist mit einem von einem Gehäuse umschlossenen Arbeitsraum und einem im Gehäuse rotierenden und sich translatorisch bewegenden Arbeitsorgan versehen. Das Arbeitsorgan ist mit Knetflügeln versehen, während am Gehäuse Knetbolzen befestigt sind, welche in den Arbeitsraum hineinragen. Die Knetflügel sind parallelogrammförmig gestaltet und besitzen einen geometrisch exakt definierten Querschnitt. Die Knetbolzen ihrerseits sind rund ausgebildet.

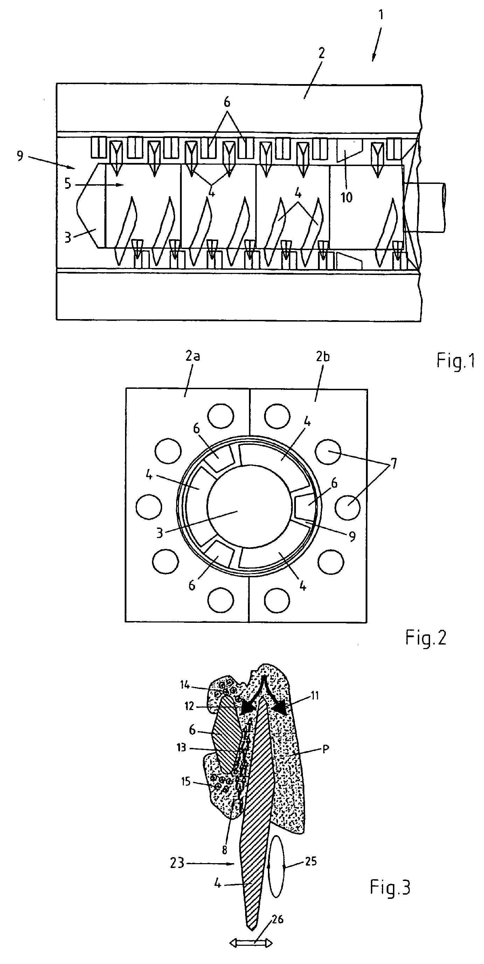

In der CH 576 086 A5 ist eine Einrichtung zum gleichzeitigen Hin- und Herbewegen einer axial verschiebbaren Welle offenbart. Die Einrichtung weist eine Hauptwelle auf, die axial verschiebbar ist und mittels eines Zahnrads angetrieben ist. Die Hauptwelle trägt eine Hohlwelle, welche frei drehbar, aber in axialer Richtung mit der Hauptwelle verbunden ist. Die Hohlwelle ist mittels eines Zahnrads derart angetrieben, dass deren Drehzahl einem ganzzahligen Vielfachen der Drehzahl der Hauptwelle entspricht. Die Hauptwelle ist mit einer Taumelscheibe versehen, welche die axiale Hin- und Herbewegung der Hauptwelle bewirkt. In der Fig. 2 ist der Bewegungsablauf eines mittels der Einrichtung angetriebenen Arbeitsorgans ersichtlich. Sowohl die schematisch dargestellten Knetzähne wie auch die Knetwerkzeuge weisen einen geometrisch exakt definierten Querschnitt auf.

In der FR-A-2 193 149 ist eine Misch- und Knetmaschine beschrieben, die mit einem rotierenden und sich translatorisch bewegenden Arbeitsorgan versehen ist. Wie in der einzigen Zeichnung erkennbar ist, weist das Arbeitsorgan parallelogrammförmig gestaltete Mischflügel auf, während die Knetbolzen rund sind.

Schliesslich ist in der GB-A-1 380 149 eine weitere gattungsgemässe Misch- und Kneteinrichtung offenbart, welche eine sich drehende und gleichzeitig hin- und herbewegende Schneckenwelle aufweist. Die Schneckenwelle ist im Innern eines zweiteiligen Gehäuses angebracht. Die Flügel der Schneckenwelle sind in der Form eines Rhombus ausgebildet, während die an der Innenwand des Gehäuses angeordneten Knetzähne rund sind.

Die Erfindung zielt daher darauf ab, eine Misch- und Knetmaschine der im Oberbegriff des Anspruchs 1 genannten Art derart weiterzubilden, dass diese erhöhten Anforderungen gerecht wird, indem die Geometrie der Knetflügel der Schneckenwelle und/oder der Knetbolzen spezifisch an gewünschte Eigenschaften anpassbar ist, so dass beispielsweise ein erhöhter mechanischer Energieeintrag und/oder eine Veränderung der im Arbeitsraum erzeugten und auf das zu verarbeitenden Produkt einwirkenden Scher- und Dehnströmungsfelder vorgenommen werden kann.

Hierzu wird nach der Erfindung eine Misch- und Knetmaschine gemäss dem Anspruch 1 bereitgestellt.

Indem die Hauptflächen der Knetflügel und/oder der Knetbolzen zumindest teilweise als Freiformflächen ausgebildet sind, ergeben sich völlig neue Beeinflussungsmöglichkeiten beispielsweise in Bezug auf den zwischen einem Knetflügel und dem zugehörigen Knetbolzen verbleibenden Spalt. Insbesondere kann die Grösse und der Verlauf dieses Spalts praktisch beliebig verändert werden, wobei gleichzeitig auch auf die der Drehbewegung überlagerte Axialbewegung Rücksicht genommen werden kann.

Die Erfindung wird nachfolgend anhand von Zeichnungen näher erläutert. In diesen Zeichnungen zeigt:
- Fig. 1: einen Längsschnitt durch eine schematisch dargestellte Misch- und Knetmaschine;
- Fig. 2: einen Querschnitt durch die schematisch dargestellte Misch- und Knetmaschine gemäss Fig.1;
- Fig.3: charakteristische Scher- und Dehnungsströmfelder in der Produktmasse, ausgelöst durch einen sich an einem Knetbolzen vorbeibewegenden Knetflügel;
- Fig. 4: die Relativbewegung zwischen einem Knetbolzen und einem konventionellen Knetflügel in schematischer Darstellung;
- Fig.5: die Relativbewegung zwischen einem Knetbolzen und einer ersten Ausführungsform eines erfindungsgemäss gestalteten Knetflügels in schematischer Darstellung;
- Fig. 6: die Relativbewegung zwischen einem Knetbolzen und einer zweiten Ausführungsform eines erfindungsgemäss gestalteten Knetflügels in schematischer Darstellung;
- Fig. 7: die Relativbewegung zwischen einem Knetbolzen und einer dritten Ausführungsform eines erfindungsgemäss gestalteten Knetflügels in schematischer Darstellung;
- Fig. 8 bis 11: ausschnittsweise einen ersten Längsschnitt durch die schematisch dargestellte Misch- und Knetmaschine mit unterschiedlich gestalteten Knetflügeln;
- Fig. 12: ein mit erfindungsgemäss ausgebildeten Knetflügeln 4 versehenes Schneckenwellenmodul, und
- Fig. 13 bis 16: jeweils einen Querschnitt durch eine schematisch dargestellte Misch-und Knetmaschine 1, bei welcher die radialen Mantelflächen der Knetflügel unterschiedlich gestaltet sind.

Fig. 1 zeigt einen Längsschnitt und Fig. 2 einen Querschnitt durch eine schematisch dargestellte Misch- und Knetmaschine 1. Anhand der Figuren 1 und 2 soll der grundsätzliche Aufbau der hier zur Rede stehenden Misch- und Knetmaschinen erläutert werden. Die Misch- und Knetmaschine 1 weist einen von einem Gehäuse 2 umschlossenen Arbeitsraum 9 auf, in welchem ein rotierendes und sich translatorisch bewegendes Arbeitsorgan 3 aufgenommen ist. Das Arbeitsorgan 3 ist mit schneckenartig ausgebildeten Knetflügeln 4 versehen, welche in Umfangsrichtung unterbrochen sind, um axiale Durchtrittsöffnungen 5 für am Gehäuse 1 angeordnete Knetbolzen 6 zu schaffen. Wie insbesondere aus der Fig. 2 ersichtlich ist, besteht das Gehäuse vorzugsweise aus zwei Teilen 2a, 2b, welche mit Temperierbohrungen 7 versehen sind. In diesen Temperierbohrungen 7 zirkuliert ein flüssiges oder gasförmiges Medium, welches dem Kühlen- und/oder Erwärmen des Gehäuses bzw. des Arbeitsraums dient. Der grundsätzliche Aufbau einer derartigen Misch- und Knetmaschine ist beispielsweise aus der CH 278,575 bekannt.

Die Misch- und Knetmaschine 1 kann zudem mit einem oder mehreren Stauringen 10 versehen sein, mittels welchen das zu verarbeitende Produkt in axialer Richtung definiert gestaut wird. Das Vorsehen von Stauringen ist beispielsweise aus der DE-A-2014693 bekannt. Schliesslich kann das Gehäuse auf der Innenseite mit Verschleissschalen (nicht dargestellt) versehen sein, welche sich leicht austauschen lassen. Das Vorsehen solcher Verschleissschalen ist beispielsweise aus der EP-A-548,022 bekannt.

Die Fig. 3 zeigt in schematischer Darstellung charakteristische Scher- und Dehnungsströmfelder in der Produktmasse P, wie sie bei einer nach dem Stand der Technik ausgebildeten Misch- und Knetmaschine durch einen sich an einem Knetbolzen 6 vorbeibewegenden Knetflügel 4 auftreten. Die Drehrichtung des Knetflügels 4 ist durch eine mit Pfeilen versehene Ellipse 25 schematisch angedeutet, während die translatorische Bewegung des Knetflügels 4 durch einen Doppelpfeil 26 angedeutet ist. Durch die Drehbewegung des Knetflügels 4 teilt dessen Spitze die Produktmasse P auf, wie dies durch Pfeile 11, 12 angedeutet ist. Zwischen dem Knetbolzen 6 und der dem Knetbolzen 6 zugewandten Hauptfläche 23 des Knetflügels 4 und dem sich daran vorbeibewegenden Knetflügel 4 besteht ein Spalt 8, dessen Breite durch die Drehung und translatorische Bewegung des Arbeitsorgans variiert. In diesem Spalt 8 wird ein Schervorgang in der Produktmasse P bewirkt, was durch Pfeile 13 angedeutet ist. Sowohl vor wie auch hinter dem Knetbolzen 6 entspannt und reorientiert sich die Produktmasse P, wie dies durch Rotationspfeile 14, 15 angedeutet ist. Wie bereits eingangs ausgeführt, entsteht pro Scherzyklus durch die sinusförmige Axialbewegung 10 des jeweiligen Knetflügels 4 nur an einer Linie eine maximale Annäherung von Knetflügel 4 und Knetbolzen 6 und damit eine maximale Schergeschwindigkeit in der Produktmasse P.

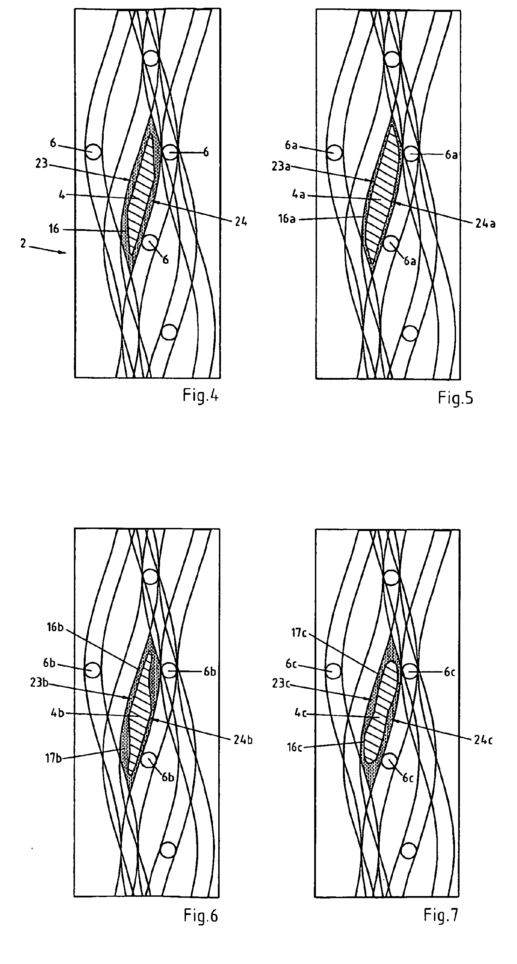

Aus der Fig. 4 ist in vereinfachter Darstellung der Bewegungsablauf des sich translatorisch bewegenden Arbeitsorgans ersichtlich, wobei die Innenseite des Gehäuses 2 bzw. die Mantelfläche des Arbeitsraums in der Abwicklung dargestellt ist und nur ein einzelner Knetflügel 4 eingezeichnet ist. Die Knetbolzen 6 sind der Einfachheit halber als runde Elemente dargestellt. Anhand dieser Figur soll die Relativbewegung zwischen einem nach dem Stand der Technik gestalteten Knetflügel 4 und den angrenzenden Knetbolzen 6 aufgezeigt werden. Der besseren Übersichtlichkeit wegen ist der Bewegungsablauf jedoch in kinematischer Umkehr eingezeichnet, d.h. der Knetflügel 4 wird als stillstehend angenommen wird, während sich die Knetbolzen 6 auf einer sinusförmigen Bahn bewegen, welche durch die Drehbewegung des Arbeitsorgans 3 und die überlagerte translatorische Bewegung zu Stande kommt. Wie aus dieser Darstellung ersichtlich ist, verbleibt zwischen den beiden seitlichen Hauptflächen 23, 24 des Knetflügels 4 und den daran vorbeistreichenden Knetbolzen 6 ein spaltförmiger Freiraum 16, dessen Breite und Verlauf durch die Geometrie des Knetflügels 4, der zugehörigen Knetbolzen 6 sowie die axiale Verlagerung des sich drehenden Arbeitsorgans 3 bestimmt wird. Da die geometrische Form der Hauptflächen 23, 24 bei einem nach dem Stand der Technik gestalteten Knetflügel 4 nur aus ebenen Flächen, Radien und einfachen, linearen Bögen besteht, kann die Form des spaltförmigen Freiraums 16 zwischen einem Knetflügel 4 und den daran vorbeistreichenden Knetbolzen 6 nur bedingt beeinflusst werden, so dass beispielsweise nur entlang einer Linie eine maximale Scherwirkung erzielt werden kann.

Diese, nur an einer Linie pro Scherzyklus maximalen Schergeschwindigkeiten reichen bisher in einigen Anwendungsfällen nur bedingt aus, um die erforderlichen Scherdeformationen/Energiedissipationen in dem zu verarbeitenden Produkt einzutragen. Dies kann dazu führen, dass der Arbeitsraum 9, und damit auch das Arbeitsorgan 3, verlängert werden muss, oder dass die geforderte Verfahrensaufgabe nicht erreicht wird bzw. nicht erreicht werden kann. Durch konventionell geformte Knetflügel 4 / Knetbolzen 6 können keine Anpassungen der Freiräume 16 und damit des freien Volumens im Verfahrensraum realisiert werden. Die Summe der freien Volumina beeinflussen wesentlich die Verweilzeiten, welche damit auch statisch bleiben. Jedenfalls ist es so, dass durch die beschränkten Gestaltungsmöglichkeiten der Hauptflächen 23, 24 bei den nach dem Stand der Technik gestalteten Knetflügeln 4 der jeweilige Freiraum 16 nur in einem bedingten Mass den gewünschten Anforderungen entspricht, wodurch in einigen Fällen nur eine suboptimale Prozesswirkung erzielt werden kann.

Fig. 5 zeigt die Relativbewegung zwischen den Knetbolzen 6 und einem erfindungsgemäss gestalteten Knetflügel 4a in schematischer Darstellung. Die beiden Hauptflächen 23a, 24a des Knetflügels 4 sind in diesem Fall überwiegend als Freiformflächen ausgebildet und weitgehend der Kontur der durch die sinusförmigen Bewegungsbahnen der Knetbolzen 6 begrenzten Freifläche angepasst, so dass zwischen dem jeweiligen Knetflügel 4 und den daran vorbeistreichenden Knetbolzen 6 ein Freiraum 16a in der Form eines gleichmässigen Spalts verbleibt. In diesem Fall wird eine optimierte Scherwirkung erzielt, indem der spaltförmige Freiraum 16a zwischen den Hauptflächen 23a, 24a des Knetflügels 4a und den daran vorbeistreichenden Knetbolzen 6 eine relativ konstante Breite aufweist und praktisch entlang der jeweiligen Hauptfläche 23a, 24a des Knetflügels 4a relativ eng ist. Das Spaltmass dieses Freiraums entspricht vorzugsweise dem 0,005 bis 0,03-fachen des Nenndurchmessers des Arbeitsorgans der jeweiligen Misch- und Knetmaschine.

Aus der Fig. 6 ist die Relativbewegung zwischen den Knetbolzen 6 und einem weiteren, erfindungsgemäss gestalteten Knetflügel 4b in schematischer Darstellung ersichtlich. Die beiden Hauptflächen 23b, 24b des Knetflügels 4b sind auch in diesem Fall wiederum überwiegend als Freiformflächen ausgebildet, so dass auf einen gleichmässig engen Spalt 16b ein sich erweiternder Freiraum 17b folgt. Der gleichmässig enge Spalt 16b bildet dabei eine intensive Scherstrecke, während der sich erweiternde Freiraum 17b eine definierte Entspannung der zu verarbeitenden Masse bewirkt.

Die Fig. 7 zeigt wiederum die Relativbewegung zwischen Knetbolzen 6 und einem weiteren, erfindungsgemäss gestalteten Knetflügel 4c in schematischer Darstellung. Auch in diesem Beispiel sind die beiden Hauptflächen 23c, 24c des Knetflügels 4c wiederum überwiegend als Freiformflächen ausgebildet, wobei der Knetflügel 4c im Längsschnitt gesehen eine Art Propellerform aufweist. Die Knetflügelform kann - bis zur "Ventilatorschaufel" variiert - durch die spezifische Ausgestaltung unterschiedlichsten Zwecken dienen. Der Anstellwinkel - Winkel zwischen der Längsmittelachse des Knetflügels und der Längsmittelachse des Arbeitsorgans - des Knetflügels wird in einem weiten Bereich verändert. Bei einem Winkel von < 90° wird eine positive Förderwirkung erzeugt. Bei 90° kann damit praktisch eine Abstauwirkung erzeugt werden. Mit Winkeln von > 90° ist sogar eine Rückförderung möglich. Die oben beschriebene fluidmechanische Funktion ist neben plastischen Massen auch für pulverförmige Stoffe einsetzbar. Der Knetflügel "pflügt" bei seiner Rotations-/Translations-Bewegung das zu verarbeitende Produkt. Die Ausgestaltung der Knetflügel-Spitzen durch grössere oder kleinere ausgeformte Rundungen ermöglicht eine Beeinflussung dieser Faltungscharakteristik: Grössere Rundungen führen eher zu einem Vorwärtsdrücken, kleinere eher zu einem Schneiden und / oder Falten des Produkts. Beide Varianten und ihre Zwischenabstufungen können verfahrenstechnisch genutzt werden: Vorwärtsdrücken → Energiedissipation, Schneiden → Oberflächenerneuerung zur Benetzung und/oder Entgasung/Entlüftung des zu verarbeitenden Produkts.

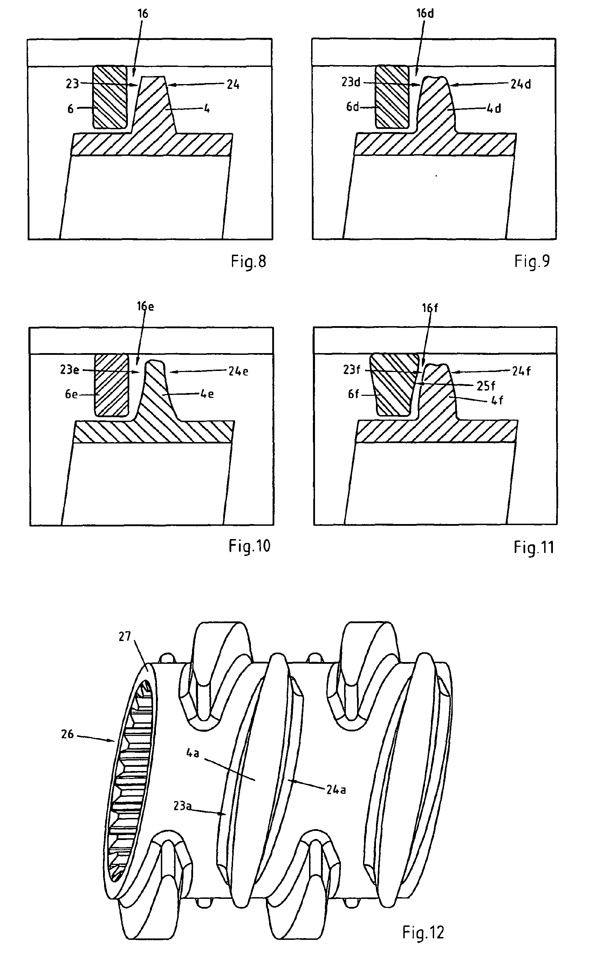

Die Fig. 8, 9, 10 und 11 zeigen ausschnittsweise einen Längsschnitt durch die schematisch dargestellte Misch- und Knetmaschine. Aus diesen Darstellungen ist insbesondere jeweils ein Knetflügel sowie ein Knetbolzen im Querschnitt ersichtlich.

In Fig. 8 ist ein konventioneller Knetbolzen 6 und ein konventioneller Knetflügel 4 dargestellt. Wie aus dieser Darstellung ersichtlich ist, verbleibt zwischen der seitlichen Hauptfläche 23 des Knetflügels 4 und dem daran vorbeistreichenden Knetbolzen 6 ein spaltförmiger Freiraum 16, dessen Breite und Verlauf durch die Geometrie des Knetflügels 4, des zugehörigen Knetbolzens 6 sowie der axialen Verlagerung des sich drehenden Arbeitsorgans bestimmt wird. Da die geometrische Form der Hauptflächen 23, 24 bei einem nach dem Stand der Technik gestalteten Knetflügel 4 nur aus ebenen Flächen, Radien und einfachen, linearen Bögen besteht, kann die Form des spaltförmigen Freiraums 16 zwischen einem Knetflügel 4 und den daran vorbeistreichenden Knetbolzen 6 - wie schon beschrieben - nur bedingt beeinflusst werden.

In der Fig. 9 ist ein herkömmlicher, nach dem Stand der Technik ausgebildeter Knetbolzen 6d mit einer ersten Ausführungsform eines erfindungsgemäss gestalteten Knetflügels 4d ersichtlich. Die beiden Hauptflächen 23d, 24d des Knetflügels 4d weisen im Querschnitt gesehen eine konvexe Grundform auf. Dadurch ergibt sich ein nach oben erweiternder Spalt 26d. Dies erlaubt, die Scherdeformation des zu verarbeitenden Produkts in der gesamten Gangtiefe des Schneckenwellenmoduls konstant zu halten: Die radial zunehmenden Umfangsgeschwindigkeiten vom Kerndurchmesser bis hin zum Aussendurchmesser werden durch eine Anpassung des Freiraums 16d kompensiert, indem sich der Scherspalt in radialer Richtung vergrössert.

In der Fig. 10 ist ein nach dem Stand der Technik ausgebildeter Knetbolzen 6e mit einer weiteren Ausführungsform eines erfindungsgemäss gestalteten Knetflügels 4e kombiniert. Die beiden Hauptflächen 23e, 24e des Knetflügels 4e weisen im Querschnitt gesehen eine konkave Grundform auf, wobei sich auch in diesem Fall der Spalt zwischen der Hauptfläche 23e des Knetflügels 4e und dem Knetbolzen 6e nach oben erweitert. Dies erlaubt, die Scherdeformation des zu verarbeitenden Produkts in der Gangtiefe des Schneckenwellenmoduls zu variieren: Die radial zunehmenden Umfangsgeschwindigkeiten von Kerndurchmesser bis hin zum Aussendurchmesser werden durch eine überproportionale Anpassung des Freiraums 16e - Vergrösserung des Scherspaltes in radialer Richtung - hin zu tieferen und damit schonenderen Schervorgängen angepasst.

In der Fig. 11 ist ein erfindungsgemäss gestalteter Knetbolzen 6f mit einem erfindungsgemäss gestalteten Knetflügel 4f kombiniert. Die beiden einander zugewandten Hauptflächen 24f, 25f des Knetbolzens 6f und des Knetflügels 4f sind derart aufeinander abgestimmt, dass der radiale Spalt 26f zwischen dem Knetbolzen 6f und dem Knetflügel 4f in etwa gleichbleibend eng ist, wodurch eine intensive Scherwirkung in der zu verarbeitenden Masse erzielt werden kann. Dies erlaubt, die Scherdeformation des zu verarbeitenden Produkts in der Gangtiefe des Schneckenwellenmoduls zu variieren: Die radial zunehmenden Umfangsgeschwindigkeiten von Kerndurchmesser bis hin zum Aussendurchmesser werden durch eine Verjüngung des Freiraums 16f - Verkleinerung des Scherspaltes in radialer Richtung - hin zu höheren Scherdeformationen und damit intensiveren Scher-und Dispersionsvorgängen angepasst.

Die Fig. 12 zeigt ein Schneckenwellenmodul 27, welches mehrere Knetflügel 4a aufweist. Das Modul 27 ist mit einer Innenverzahnung 26 versehen und wird auf eine Antriebswelle (nicht dargestellt) aufgeschoben. Das eigentliche Arbeitsorgan wird durch die Antriebswelle sowie eine Vielzahl solcher Module 27 gebildet, die auf die zentrale, als Führungs- und Antriebsorgan dienende Antriebswelle aufgeschoben werden. Der grundsätzliche Vorteil solcher Module 27 besteht darin, dass sie einzeln oder im Verbund austauschbar sind. Den Anforderungen entsprechend können unterschiedlich gestaltet Module zum Einsatz kommen, indem beispielsweise die Hauptflächen der Knetflügel unterschiedlich gestaltet sind. Im vorliegenden Beispiel sind die beiden seitlichen Hauptflächen 23a, 24a des jeweiligen Knetflügels 4a als Freiformflächen ausgebildet, indem sie in keinem Punkt einen natürlichen Anfangspunkt besitzen.

Solche Module 27 können beispielsweise auch dazu verwendet werden, die Misch- und Knetmaschine in axialer Richtung in unterschiedliche Verfahrenszonen aufzuteilen. So können Module mit unterschiedlich gestalteten Knetflügeln aneinandergereiht werden, wobei natürlich auch die Knetbolzen entsprechend angepasst werden können, indem beispielsweise deren Freiformflächen unterschiedlich gestaltet sind.

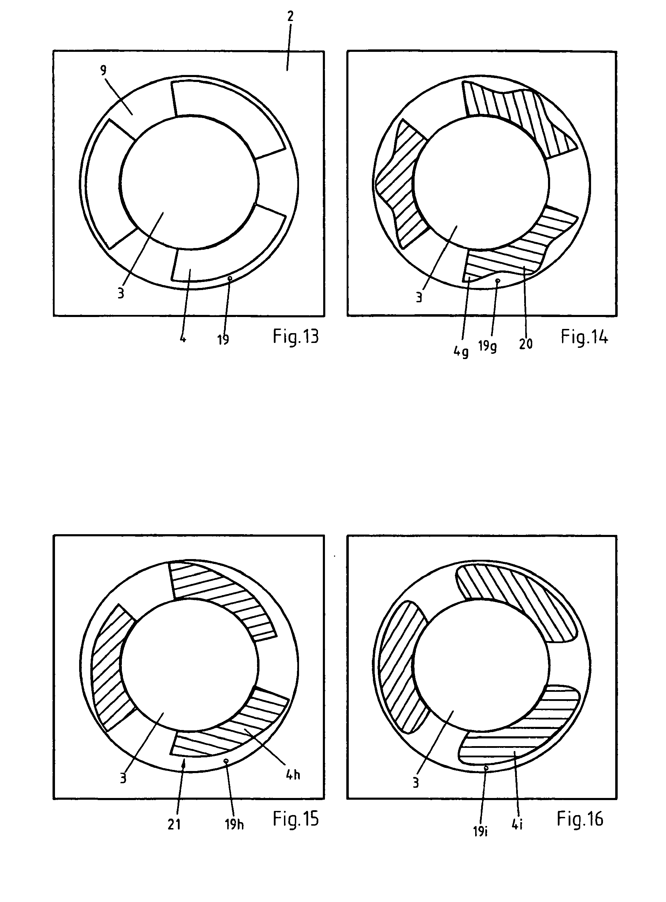

Die Fig. 13 bis 16 zeigen jeweils einen Querschnitt durch eine schematisch dargestellte Misch- und Knetmaschine 1, deren Arbeitsorgan 3 mit unterschiedlich gestalteten Knetflügeln 4 versehen ist. Bei den vier gezeigten Ausführungsbeispielen unterschieden sich insbesondere die radialen Mantelflächen der Knetflügel, welche ggf. durch Freiformflächen gebildet werden. Die Fig. 13 zeigt dabei eine konventionelle Form eines Knetflügels 4, bei der ein gleichmässiger radialer Spalt 19 zwischen der radialen Mantelfläche des jeweiligen Knetflügels 4 und der den Arbeitsraum 9 umschliessenden Innenseite des Gehäuses 2 besteht. Bei dem in Fig. 14 gezeigten Ausführungsbeispiel ist die radiale Mantelfläche des Knetflügels 4g durch eine kamelhöckerartige Erhebung 20 modifiziert, so dass ein radialer Spalt 19g mit variierender Breite gebildet wird. Durch diese Erhebung 20 werden die radial erzeugten Scherungsspitzen deutlich reduziert. Bei der in der Fig. 15 gezeigten Ausführungsform weist die gekrümmte Mantelfläche 21 des jeweiligen Knetflügels 4h einen sich verändernden Radius auf, so dass sich der Radialspalt 19h kontinuierlich verengt bzw. erweitert. Dies erlaubt, gegebenenfalls in Kombination mit den vorgängig beschriebenen Effekten, eine Ausbildung von radialen Scher- und Dehnströmungen. Schliesslich zeigt die Fig. 16 ein Ausführungsbeispiel, bei welchem die Anfangs- und Endbereiche des jeweiligen Knetflügels 4i abgerundet sind, der Radialspalt 19i jedoch konstant breit ist. Durch diese Rundungen wird die Mischeffizienz und das Langzeitverhalten der Schneckenwellenmodule 27 eingestellt: Die sich normalerweise durch abrasiven Verschleiss einstellenden Geometrieformen werden nachgebildet. So wird ein eindeutig definiertes, über die ganze Lebensdauer konstant bleibendes Eigenschaftsprofil der Schneckenwellenmodule erreicht.

Durch die Gestaltung der Knetflügel sowie der Knetbolzen, namentlich der beiden seitlichen Hauptflächen des jeweiligen Knetflügels sowie der Hauptflächen des jeweiligen Knetbolzens kann insbesondere die Schergeschwindigkeitsverteilung in radialer Richtung angepasst werden. Dies ermöglicht u.a. den massgeschneiderten Einsatz solcher Elemente in Funktion der Masseviskosität und der absoluten Umfangsgeschwindigkeit des Arbeitsorgans bzw. der daran angeordneten Knetflügel.

Indem die Hauptflächen des jeweiligen Knetbolzens und/oder Knetflügels zumindest teilweise als Freiformflächen ausgebildet sind, kann sowohl der radiale- wie auch der axiale Verlauf des Spalts zwischen dem jeweiligen Knetbolzen und dem jeweiligen Knetflügel praktisch beliebig beeinflusst und an die gewünschten Anforderungen, namentlich im Hinblick auf die Scher-/ Misch- und Knetfunktionen angepasst werden.

Neben der Ausgestaltung der Hauptflächen der Knetbolzen und/oder der Knetflügel können natürlich auch noch andere Elemente der Misch- und Knetmaschine wie beispielsweise die Mantelfläche des Arbeitsorgans, die Hauptflächen von Stauringen sowie die Mantelflächen von Verschleissschalen zumindest teilweise als Freiformflächen ausgebildet sein. Natürlich ist es auch möglich herkömmliche Flächenformen wie ebene, runde, kugelige und einfache Bogenflächen mit Freiformflächen zu kombinieren.

Die beschriebenen Ausführungsbeispiele zeigen auf, dass mit der vorliegenden Erfindung die Hauptflächen der Knetflügel und/oder der Knetbolzen auf Bearbeitungsprozesse wie Fördern, Scheren, Schmelzen, Mischen, Kneten, Entgasen, Kühlen etc. hin evaluiert und im Hinblick auf das jeweilige Verarbeitungsziel präzise, abgebildet, ausgelegt und gefertigt werden können.

Dies stellt die Umkehr der bisherigen Vorgehensweise dar: Eine beschränke Anzahl von vorgegebenen Flächenformen stand zur Verfügung. Durch Kombination dieser Grundformen wurden die jeweiligen verfahrens-technischen Anforderungen und konventionellen maschinenbaulichen Möglichkeiten konstruktiv und fertigungs-technisch angenähert. Die sich dadurch ergebenden Kompromisse definieren die Einsatzgrenzen der bisherigen Technologie. Die volle Flexibilisierung der drei-dimensionalen Geometriegestaltung minimiert die Diskrepanz zwischen theoretischen, verfahrens-technischen Vorgaben und der realen Umsetzbarkeit mit aktuellen Methoden (konstruktiv und fertigungstechnisch). Die Erfindung erweitert in diesem Sinne die Operationsfenster der bisherigen Anwendungsfelder und eröffnet durch die volle Flexibilisierung der dreidimensionalen Geometriegestaltung neue, bisher nicht erschlossene oder zugängliche Anwendungen.

Die beschriebene Misch- und Knetmaschine eigent sich insbesondere zum Aufbereiten von schüttgutartigen, plastischen und/oder pastösen Massen, wobei unter schüttgutartigen Massen beispielsweise Pulver, Granulate, Flakes etc. zu verstehen sind. Allerdings ist diese Aufzählung keinesfalls als abschliessend zu betrachten.

## Patentansprüche

1. Misch- und Knetmaschine (1) zum Aufbereiten insbesondere von schüttgutartigen, plastischen und/oder pastösen Massen, mit einem von einem Gehäuse (2) umschlossenen Arbeitsraum (9) und einem im Gehäuse (2) rotierenden und sich translatorisch bewegenden Arbeitsorgan (3), welches mit Knetflügeln (4) versehen ist, und mit am Gehäuse (2) befestigten Knetbolzen (6), welche in den Arbeitsraum (9) hineinragen, **dadurch gekennzeichnet, dass** die Hauptflächen der Knetflügel (4) und/oder der Knetbolzen (6) zumindest teilweise als Freiformflächen (23a-23f) ausgebildet sind.

2. Misch- und Knetmaschine (1) nach Anspruch 1, **dadurch gekennzeichnet, dass** die dreidimensionale Geometrie der Hauptflächen (23a-23f) der Knetflügel (4) und/oder der Knetbolzen (6) zumindest teilweise derart ausgebildet ist/sind, dass sie in keinem Punkt einen natürlichen Anfangspunkt besitzen.

3. Misch- und Knetmaschine (1) nach Anspruch 1 oder 2, **dadurch gekennzeichnet, dass** zumindest die einem Knetbolzen (6b, 6c) zugewandte Hauptfläche (23a-23f) eines Knetflügels (4b, 4c) als Freiformfläche ausgebildet ist.

4. Misch- und Knetmaschine (1) nach einem der vorhergehenden Ansprüche, **dadurch gekennzeichnet, dass** zumindest die einem Knetflügel (4c) zugewandte Hauptfläche (25c) eines Knetbolzens (6c) als Freiformfläche ausgebildet ist.

5. Misch- und Knetmaschine (1) nach einem der vorhergehenden Ansprüche, **dadurch gekennzeichnet, dass** die Hauptflächen der Knetflügel (4) und/oder der Knetbolzen (6) derart auf die translatorische Bewegung des Arbeitsorgans (3) abgestimmt sind, dass der spaltförmige Freiraum (16a) zwischen den Hauptflächen (23a, 24a) des Knetflügels (4a) und den daran vorbeistreichenden Knetbolzen (6) im Hinblick auf die auf die zu verarbeitende Masse einwirkende Scher- und/oder Misch- und/oder Dehn- und/oder Falt- und/oder Knetarbeit beeinflussbar ist.

6. Misch- und Knetmaschine (1) nach einem der vorhergehenden Ansprüche, **dadurch gekennzeichnet, dass** die Hauptfläche (23a) des jeweiligen Knetflügels (4a) derart auf den zugehörigen Knetbolzen (6) abgestimmt ist, dass zwischen dem Knetbolzen (6) und dem sich daran vorbeibewegenden Knetflügel (4a) ein gleichmässiger Spalt (16a) gebildet wird, dessen Spaltmass dem 0,005 bis 0,03-fachen des Nenndurchmessers der jeweiligen Misch- und Knetmaschine (1) entspricht.

7. Misch- und Knetmaschine (1) nach einem der vorhergehenden Ansprüche, **dadurch gekennzeichnet, dass** die Misch- und Knetmaschine (1) in axialer Richtung unterschiedliche Verfahrenszonen aufweist, und dass die Hauptflächen der Knetflügel (4) und/oder der Knetbolzen (6) in den unterschiedliche Verfahrenszonen unterschiedlich ausgebildet sind.

8. Misch- und Knetmaschine (1) nach einem der vorhergehenden Ansprüche, **dadurch gekennzeichnet, dass** die Hauptflächen (23b, 24b, 23c, 24c) der Knetflügel (4b, 4c) und/oder der Knetbolzen zumindest teilweise derart ausgebildet sind, dass in der zu verarbeitenden Masse definierte Dehnungsströmfelder entstehen.

9. Misch- und Knetmaschine (1) nach einem der vorhergehenden Ansprüche, **dadurch gekennzeichnet, dass** die radialen Mantelflächen der Knetflügel (4g, 4h) zumindest teilweise als Freiformflächen ausgebildet sind.

10. Misch- und Knetmaschine (1) nach einem der vorhergehenden Ansprüche, **dadurch gekennzeichnet, dass** die Hauptflächen (23a, 24a) mindestens eines Teils der Knetflügel (4a) als sinusförmige Flächen ausgebildet sind.

11. Misch- und Knetmaschine (1) nach einem der vorhergehenden Ansprüche, **dadurch gekennzeichnet, dass** die Hauptflächen mindestens eines Teils der Knetbolzen als sinusförmige Flächen ausgebildet sind.

## Claims

1. Mixing and kneading machine (1) for the preparation of, in particular, plastic and/or pasty masses resembling bulk goods, with a working space (9) surrounded by a housing (2) and with a working member (3) which rotates and moves in translation in the housing (2) and which is provided with kneading blades (4), and with kneading bolts (6) which are fastened to the housing (2) and project into the working space (9), **characterized in that** the main surfaces of the kneading blades (4) and/or of the kneading bolts (6) are designed at least partially as free-form surfaces (23a - 23f).

2. Mixing and kneading machine (1) according to Claim 1, **characterized in that** the three-dimensional geometry of the main surfaces (23a - 23f) of the kneading blades (4) and/or of the kneading bolts (6) is designed at least partially in such a way that they do not possess a natural starting point at any point.

3. Mixing and kneading machine (1) according to Claim 1 or 2, **characterized in that** at least the main surface (23a - 23f), facing a kneading bolt (6b, 6c), of a kneading blade (4b, 4c) is designed as a free-form surface.

4. Mixing and kneading machine (1) according to one of the preceding claims, **characterized in that** at least the main surface (25c), facing a kneading blade (4c), of a kneading bolt (6c) is designed as a free-form surface.

5. Mixing and kneading machine (1) according to one of the preceding claims, **characterized in that** the main surfaces of the kneading blades (4) and/or of the kneading bolts (6) are coordinated with the translational movement of the working member (3) in such a way that the gap-shaped free space (16a) between the main surfaces (23a, 24a) of the kneading blade (4a) and the kneading bolts (6) brushing past it can be influenced in terms of the shearing and/or mixing and/or stretching and/or folding and/or kneading work acting on the mass to be processed.

6. Mixing and kneading machine (1) according to one of the preceding claims, **characterized in that** the main surface (23a) of the respective kneading blade (4a) is coordinated with the associated kneading bolt (6) in such a way that there is formed between the kneading bolt (6) and the kneading blade (4a) moving past it a uniform gap (16a), the gap dimension of which corresponds to 0.005 to 0.03 times the nominal diameter of the respective mixing and kneading machine (1).

7. Mixing and kneading machine (1) according to one of the preceding claims, **characterized in that** the mixing and kneading machine (1) has different zones of movement in the axial direction, and **in that** the main surfaces of the kneading blades (4) and/or of the kneading bolts (6) are designed differently in the different zones of movement.

8. Mixing and kneading machine (1) according to one of the preceding claims, **characterized in that** the main surfaces (23b, 24b, 23c, 24c) of the kneading blades (4b, 4c) and/or of the kneading bolts are designed at least partially in such a way that defined stretching flow fields arise in the mass to be processed.

9. Mixing and kneading machine (1) according to one of the preceding claims, **characterized in that** the radial surface areas of the kneading blades (4g, 4h) are designed at least partially as free-form surfaces.

10. Mixing and kneading machine (1) according to one of the preceding claims, **characterized in that** the main surfaces (23a, 24a) of at least some of the kneading blades (4a) are designed as sinusoidal surfaces.

11. Mixing and kneading machine (1) according to one of the preceding claims, **characterized in that** the main surfaces of at least some of the kneading bolts are designed as sinusoidal surfaces.

## Revendications

1. Mélangeur pétrisseur (1) destiné à préparer en particulier des masses de type produit en vrac, ductiles et/ou pâteuses, comprenant une chambre de travail (9) entourée par un boîtier (2) et un organe de travail (3) tournant et se déplaçant en translation dans le boîtier (2), lequel organe est pourvu d'ailes de pétrissage (4), et comprenant des axes de pétrissage (6) fixés au boîtier (2), lesquels font saillie dans la chambre de travail (9), **caractérisé en ce que** les surfaces principales des ailes de pétrissage (4) et/ou des axes de pétrissage (6) sont réalisées au moins en partie comme des surfaces à forme libre (23a-23f).

2. Mélangeur pétrisseur (1) selon la revendication 1, **caractérisé en ce que** la géométrie tridimensionnelle des surfaces principales (23a-23f) des ailes de pétrissage (4) et/ou des axes de pétrissage (6) est/sont réalisée(s) au moins en partie de telle sorte qu'elles ne possèdent en aucun cas de point de départ naturel.

3. Mélangeur pétrisseur (1) selon la revendication 1 ou 2, **caractérisé en ce qu'**au moins la surface principale (23a-23f) d'une aile de pétrissage (4b, 4c) tournée vers un axe de pétrissage (6b, 6c) est réalisée comme une surface à forme libre.

4. Mélangeur pétrisseur (1) selon l'une quelconque des revendications précédentes, **caractérisé en ce qu'**au moins la surface principale (25c) d'un axe de pétrissage (6c) tournée vers une aile de pétrissage (4c) est réalisée comme une surface à forme libre.

5. Mélangeur pétrisseur (1) selon l'une quelconque des revendications précédentes, **caractérisé en ce que** les surfaces principales des ailes de pétrissage (4) et/ou des axes de pétrissage (6) sont adaptées au déplacement en translation de l'organe de travail (3) de telle sorte que l'espace libre en forme de fente (16a) entre les surfaces principales (23a, 24a) de l'aile de pétrissage (4a) et les axes de pétrissage circulant devant peut être influencé en ce qui concerne le travail de cisaillement et/ou de mélange et/ou d'extension et/ou de pliage et/ou de pétrissage.

6. Mélangeur pétrisseur (1) selon l'une quelconque des revendications précédentes, **caractérisé en ce que** la surface principale (23a) de l'aile de pétrissage (4a) respective est adaptée à l'axe de pétrissage (6) associé de telle sorte qu'une fente (16a) de même dimension est formée entre l'axe de pétrissage (6) et l'aile de pétrissage (4a) se déplaçant devant, fente dont la dimension correspond à 0,005 à 0,03 fois le diamètre nominal du mélangeur pétrisseur (1) respectif.

7. Mélangeur pétrisseur (1) selon l'une quelconque des revendications précédentes, **caractérisé en ce que** le mélangeur pétrisseur (1) comprend dans la direction axiale différentes zones de déplacement, et **en ce que** les surfaces principales des ailes de pétrissage (4) et/ou des axes de pétrissage (6) sont réalisées de façon différente dans les différentes zones de déplacement.

8. Mélangeur pétrisseur (1) selon l'une quelconque des revendications précédentes, **caractérisé en ce que** les surfaces principales (23b, 24b, 23c, 24c) des ailes de pétrissage (4b, 4c) et/ou des axes de pétrissage sont réalisées au moins en partie de telle sorte que cela crée dans la masse à travailler des champs de courant d'extension définis.

9. Mélangeur pétrisseur (1) selon l'une quelconque des revendications précédentes, **caractérisé en ce que** les surfaces d'enveloppe radiales des ailes de pétrissage (4g, 4h) sont réalisées au moins en partie comme des surfaces à forme libre.

10. Mélangeur pétrisseur (1) selon l'une quelconque des revendications précédentes, **caractérisé en ce que** les surfaces principales (23a, 24a) d'au moins une partie des ailes de pétrissage (4a) sont réalisées comme des surfaces sinusoïdales.

11. Mélangeur pétrisseur (1) selon l'une quelconque des revendications précédentes, **caractérisé en ce que** les surfaces principales d'au moins une partie des boulons de pétrissage sont réalisées comme des surfaces sinusoïdales.
